# DEMANDE DE BREVET EUROPEEN

(11) **EP 4 165 983 A1**
(43) Date de publication de la demande: **19.04.2023**
(21) Numéro de dépôt: 22306037.7
(22) Date de dépôt: 11.07.2022
(51) Int. Cl.: A01G 5/04, B65B 25/02, B65D 5/20, B65D 5/24, B65D 81/38, B65D 85/50

(54) **PROCEDE D'OBTENTION D'UN COLIS DE FLEURS COUPEES, ET COLI OBTENU PAR UN TEL PROCEDE**

(30) Priorité: 15.07.2021 FR 2107639
(71) Demandeur: Green, 59100 Roubaix (FR)
(72) Inventeur: CARDOSO, Gilles, 08000 CHARLEVILLE-MEZIERES (FR)
(74) Mandataire: Bureau Duthoit Legros Associés

(57) **Abrégé**

La présente divulgation est relative à un procédé d'obtention d'un colis de fleurs coupées (F) comprenant les étapes suivantes :
/A/ Disposer un emballage primaire formant un conteneur pour les tiges des fleurs coupées, avec une ouverture,
/B/ Disposer une dose de matière naturelle absorbante dans le conteneur ouvert, ainsi qu'un volume d'eau, absorbé entièrement par la matière naturelle absorbante,
/C/ Disposer les fleurs coupées avec insertion des tiges coupées dans la matière naturelle absorbante humidifiée, et éventuellement
/D/ Refermer l'ouverture de l'emballage primaire sur les tiges des bouquets de sorte à maintenir prisonnier la matière naturelle absorbante au sein du conteneur fermé sur les tiges du bouquet, avec mise en contact des extrémités coupées des tiges des fleurs coupées (F) avec la matière naturelle absorbante humidifiée, obtenant le colis de fleurs coupées.

## Description

La présente divulgation concerne un procédé d'obtention d'un colis de fleurs coupées, ainsi qu'un colis obtenu par un tel procédé.

### Domaine technique

La présente divulgation relève du domaine des colis utilisés pour le transport de fleurs coupées, et qui doivent assurer la préservation des fleurs durant leur transport.

La présente divulgation s'intéresse plus particulièrement aux transports de colis notamment par livreur, par voie postale, pour lesquels les colis peuvent être amenés à être déplacés sans grand soin, en particulier sans grand soin du respect du sens haut des colis, à savoir qu'il n'est pas rare que le colis soit transporté « à l'envers » du sens à respecter.

Le transport de fleurs coupées peut se dérouler, suivant le temps de transport, sur plusieurs jours, et nécessite bien souvent de maintenir les tiges coupées en contact avec de l'eau pour leur conservation.

Il est ainsi possible de former des colis de fleurs coupées, en maintenant les tiges dans une réserve d'eau pour permettre l'hydratation des fleurs lors du transport, puis de regrouper des colis dans un carton emballage secondaire, les fleurs orientées vers haut.

Une fois le carton de l'emballage secondaire fermé, le sens haut du carton doit être scrupuleusement respecté par les opérateurs, sous peine de provoquer des fuites d'eau lors du transport, qui peuvent non seulement souiller le de fleurs, mais encore éventuellement les colis voisins lors du transport.

### Technique antérieure

L'état de la technique des colis pour fleurs coupées enseigne ainsi des emballages avec un système d'hydratation des tiges coupées qui permet d'éviter les fuites d'eau, même lorsque le sens « haut » du colis n'est pas respecté, à savoir lorsque les extrémités des tiges coupées pointent vers le haut.

La plupart des systèmes d'hydratation repose sur la présence d'une mousse synthétique à cellules ouvertes, qui est humidifiée et permet d'hydrater les tiges coupées de fleurs lors du transport : les emballages des documents US2008099356 ou US2015136627 sont ainsi des exemples de tels emballages avec un tel système d'hydratation en mousse. Cette mousse synthétique évite la présence de l'eau libre dans l'emballage à l'origine des fuites.

Selon les constatations des inventeurs, les emballages des colis de fleurs coupées selon cet état de la technique, en particulier leur système d'hydratation synthétique génère en fin de vie du colis des déchets plastiques, bien souvent de différentes natures qui sont difficiles à recycler : ces colis et emballages présentent ainsi une empreinte écologique non négligeable, non seulement pour leur production, mais encore pour le traitement des déchets qu'ils génèrent.

### Résumé

La présente divulgation vient améliorer la situation.

Selon un premier aspect de la présente divulgation, il est proposé un procédé d'obtention d'un colis de fleurs coupées comprenant les étapes suivantes :
/A/ Disposer un emballage primaire formant un conteneur pour les tiges des fleurs coupées, avec une ouverture,
/B/ Disposer une dose de matière naturelle absorbante dans le conteneur ouvert, ainsi qu'un volume d'eau, absorbé entièrement par la matière naturelle absorbante,
/C/ Disposer les fleurs coupées avec insertion des tiges coupées dans la matière naturelle absorbante humidifiée, et éventuellement
/D/ Refermer l'ouverture de l'emballage primaire sur les tiges bouquets de sorte à maintenir prisonnier la matière naturelle absorbante au sein du conteneur fermé sur les tiges du bouquet de fleurs, avec mise en contact des extrémités coupées des tiges des fleurs coupées avec la matière naturelle absorbante humidifiée, obtenant le colis de fleurs coupées.

Les caractéristiques exposées dans les paragraphes suivants peuvent, optionnellement, être mises en œuvre, indépendamment les unes des autres ou en combinaison les unes avec les autres :
- la dose de matière naturelle est de la matière végétale, en particules, telle qu'un broyat de matière végétale ou de la sciure de végétal ;
- la matière végétale sont des particules de bois ; et en particulier du peuplier ;
- la matière végétale est la chènevotte de chanvre ;
- les particules de végétal sont des lamelles, et en particulier les lamelles sont d'épaisseur inférieure à 1 mm telle que compris entre 0,1mm et 0,6mm, de longueur comprise entre 2 mm à 7mm et de largeur comprise entre 1 mm à 3mm ;
- la matière absorbante est de la cellulose en particules, telles que des lamelles en particulier d'épaisseur comprise entre 1/10 de millimètre et 7/10 de millimètre, de longueur comprise entre 2mm et 4mm et de largeur comprise entre 1mm à 2 mm.
- le volume d'eau à l'étape /B/ est compris entre 140 ml et 450 ml, en particulier compris entre 300 ml et 400 ml ;
- la dose de matière végétale, en particulier de végétal en particules telle que la dose de particules de peuplier ou de particules de chènevotte de chanvre à l'état sec à l'étape /B/ est comprise entre 30g et 100 g, en particulier entre 35g et 80g ;
- la dose de matière naturelle à l'état sec à l'étape /B/ est un bloc compressé de particules de végétal, et en particulier un bloc compressé de lamelles de cellulose.

Selon un mode de réalisation, l'emballage primaire est un conteneur obtenu par cartonnage, par pliage d'un flan de carton, le conteneur comprenant :
-- une paroi fond et des parois latérales avec ladite ouverture, supérieure définit entre des bords supérieurs des parois latérales,
-- des volets de fermeture attenant par des lignes de pliage aux bords supérieurs des parois latérales,
et dans lequel à l'étape /D/ les volets de fermetures sont rabattus contre les tiges du bouquet et maintenus par la pose d'un lien.

Selon un mode de réalisation, la paroi de fond et les parois latérales au nombre de quatre définissent un conteneur de forme tronconique, et dans lequel quatre soufflets, s'étendent respectivement entre deux cotés successifs des parois latérales pour assurer l'étanchéité au fluide entre les parois latérales du conteneur tronconique, y compris un premier soufflet entre la première paroi latérale et la deuxième paroi latérale, un deuxième soufflet entre la deuxième paroi latérale et la troisième paroi latérale, un troisième soufflet entre la troisième paroi latérale et la quatrième paroi latérale et un quatrième soufflet entre la quatrième paroi latérale et la première paroi latérale, chaque soufflet comprenant deux segments triangulaires, avec un premier segment triangulaire attenant via une ligne de pli à un coté d'une des parois latérales, et un deuxième segment attenant via une ligne de pli à un côté d'une paroi latérale successive, les deux segments solidaires l'un de l'autre via une ligne de pli et dans lequel le conteneur tronconique est obtenu par pliage des soufflets qui sont pliés par repliage des deux segments et collage mutuel des segments.

Selon un mode de réalisation, des soufflets, notamment au nombre de quatre, s'étendent respectivement entre les côtés des volets de fermeture, chaque soufflet étant configuré pour assurer, dans la position rabattue des volets de fermeture contre les tiges des fleurs, une étanchéité pour la matière absorbante humidifiée, entre deux volets de fermeture successifs lorsque le conteneur est retourné, les soufflets étant configurés pour se déployer lorsque les volets de fermeture sont dans leur position d'ouverture, libérant l'ouverture du conteneur, et pour se replier sur eux même lorsque les volets de fermeture assurent la fermeture de l'ouverture par rabattement des volets de fermeture contre les tiges du bouquets, les volets de fermeture maintenus par la pose du lien, à l'étape /D/.

Selon un mode de réalisation, l'emballage primaire est une poche formée par un film de matière étanche et dans lequel aux étapes /A/, /B/ et /C/ le film est maintenu, au niveau de l'ouverture du conteneur formé par le film, sur un support périphérique, et dans lequel à l'étape /D/ le film est refermé sur les tiges des fleurs et maintenu sur les tiges par la pose d'un lien. Le film peut être un biopolymère.

Selon un mode de réalisation, à l'étape /D/ le volume de la matière naturelle humidifié représente au moins 50% du volume du conteneur refermé sur les tiges du bouquet, voire au moins 75% du volume du conteneur.

Selon un **deuxième aspect,** la présente divulgation concerne un colis de fleurs coupée obtenu selon le procédé de la présente divulgation comprenant un bouquet de fleurs coupées dont les tiges sont reçues dans l'emballage primaire qui est refermé sur les tiges des fleurs coupées du bouquet, les extrémités coupées des tiges en contact avec la matière absorbante naturelle humidifiée.

Selon un **troisième aspect** la présente divulgation concerne un procédé selon la présente divulgation dans lequel les étapes /A/, /B/, /C/ et /D/ sont renouvelées, obtenant plusieurs colis de fleurs coupées emballés par l'emballage primaire (1) à l'étape /D/, comprenant chacun un bouquet de fleurs coupées dont les tiges sont reçues dans l'emballage primaire qui est refermé sur les tiges des fleurs du bouquet, les extrémités coupées des tiges en contact avec la matière absorbante naturelle humidifiée et dans lequel on dispose les différents bouquets de fleurs coupées dans un carton formant un emballage secondaire, calés à l'intérieur du carton de l'emballage secondaire, et on ferme l'emballage secondaire.

Selon un **quatrième aspect,** la présente divulgation concerne un colis de fleurs coupées obtenu par le procédé objet du troisième aspect, comprenant un emballage secondaire formé par un carton recevant une pluralité de bouquets de fleurs coupées dont les tiges de chaque bouquets de fleurs sont reçues dans l'emballage primaire qui est refermé sur les tiges des fleurs du bouquet, les extrémités coupées des tiges en contact avec la matière absorbante naturelle humidifiée, les différents bouquets de fleurs coupées calés à l'intérieur du carton de l'emballage secondaire.

Selon un **cinquième aspect,** la présente divulgation concerne encore l'utilisation des colis obtenus selon le procédé selon le premier aspect, ou du colis obtenu selon le procédé selon le troisième aspect pour le transport de bouquets de fleurs, notamment par camion, bateau ou encore par avion.

Selon un **sixième aspect,** la présente divulgation est relative à un procédé de fabrication d'un bloc compressé de particules végétales de cellulose, convenant pour la mise en œuvre de du procédé un procédé d'obtention d'un colis de fleurs coupées pour lequel la dose est un bloc compressé de particules végétales de cellulose, ledit procédé de fabrication d'un bloc compressé de particules comprenant les étapes suivantes :
- dérouler une bande de cellulose à partir d'une bobine de cellulose,
- découper la bande de cellulose en lamelles, en particulier d'épaisseur comprise entre 1/10 de millimètre et 7/10 de millimètre, de longueur comprise entre 2mm et 4mm et de largeur comprise entre 1mm à 2 mm, par des découpes transversales à la direction de la bande et des découpes longitudinales à la direction de la bande,
- regrouper les lamelles dans une matrice d'une presse et compresser les lamelles jusqu'à obtenir un bloc compressé de particules végétales de cellulose en particulier à une pression comprise entre 200 et 1000 Newtons par cm³.

Selon un **septième aspect,** la présente divulgation concerne encore un bloc compressé de lamelles de cellulose, en particulier obtenu selon le procédé selon le sixième aspect, les lamelles d'épaisseur comprise entre 1/10 de millimètre et 7/10 de millimètre, de longueur comprise entre 2mm et 4mm et de largeur comprise entre 1mm à 2 mm, et dans lequel ledit bloc compressé présente une vitesse d'absorption inférieure à 20 secondes, de préférence inférieure à 10 secondes pour absorber 5ml d'eau par gramme de matière naturelle cellulose

Ce bloc compressé permet avantageusement la mise en œuvre du procédé selon le premier aspect, en limitant le cycle de mise en œuvre pour les opérateurs en raison de la très grande vitesse d'absorption, tout en limitant les risques d'erreur de dosage.

### Brève description des dessins

D'autres caractéristiques, détails et avantages apparaîtront à la lecture de la description détaillée ci-après, et à l'analyse des dessins annexés, sur lesquels :
**Fig. 1a**

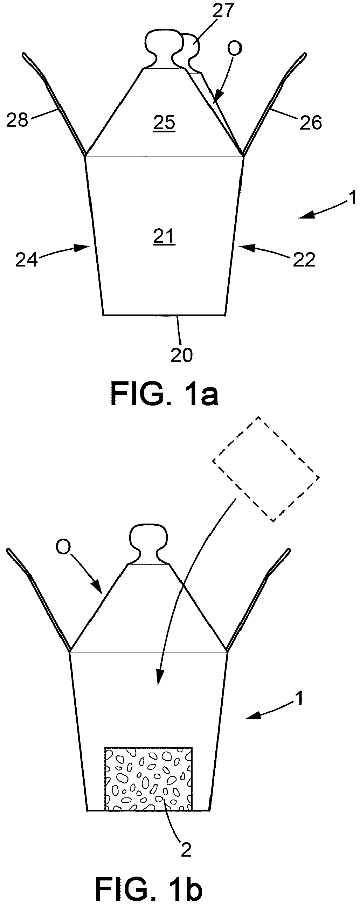

   [Fig. 1a] est une vue d'un emballage primaire, en carton, mis à disposition lors d'une première étape du procédé d'obtention du colis, l'emballage formant un conteneur avec une paroi de fond, quatre parois latérales, et quatre volets de fermeture dans l'état ouvert du conteneur.
**Fig. 1b**
   [Fig. 1b] est une vue de coupe du conteneur de la figure 1a, après mise en place dans le conteneur d'une dose de matière naturelle absorbante, sous forme d'un bloc compressé de particules d'une matière végétale, selon une deuxième étape du procédé.
**Fig. 1c**

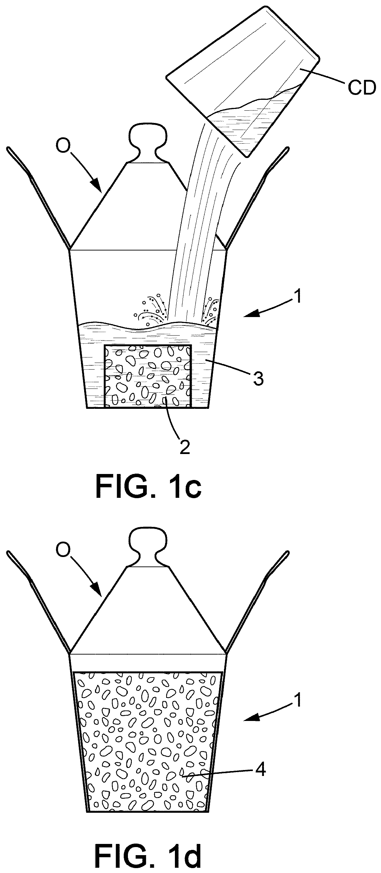

   [Fig. 1c] est une vue consécutive à la figure 1b, illustrant une troisième étape du procédé dans lequel on déverse sur la matière naturelle à l'état sec, un volume d'eau déterminé de sorte que l'eau soit entièrement absorbée par la matière absorbante, sans présence d'eau libre non absorbée.
**Fig. 1d**
   [Fig. 1d] est une vue consécutive de la figure 1c après absorption totale du volume d'eau par la matière naturelle absorbante.
**Fig. 1e**

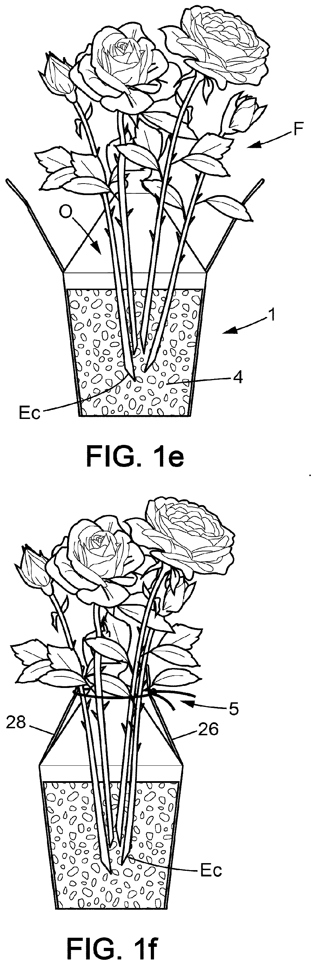

   [Fig. 1e] est une vue consécutive à la figure 1c, illustrant une quatrième étape du procédé dans lequel on insère les tiges coupées dans la matière absorbante humidifiée.
**Fig. 1f**
   [Fig. 1f] est une vue consécutive de la figure 1e, dans laquelle on ferme l'emballage primaire sur les tiges des fleurs, par le rabattement de volets de fermeture et la mise en place d'un lien assurant le maintien des volets de fermeture contre les tiges du bouquet.
**Fig. 2**

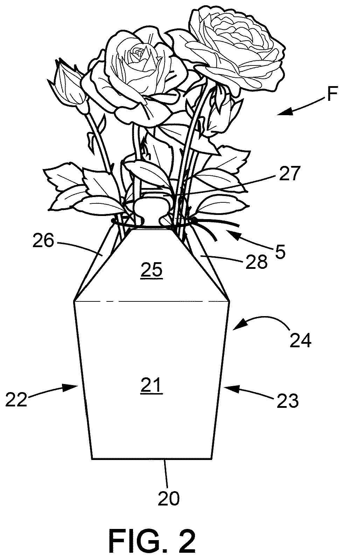

   [Fig. 2] est une vue en perspective du colis obtenu à la figure 1f qui comprend un bouquet de fleurs coupées dont les tiges sont reçues dans l'emballage primaire qui est refermé sur les tiges des fleurs du bouquet, les extrémités coupées des tiges en contact avec la matière absorbante naturelle humidifiée, maintenue prisonnière dans l'emballage primaire.
**Fig. 3**

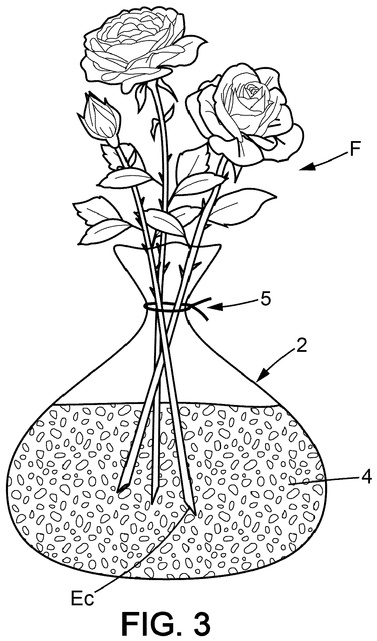

   [Fig. 3] est une vue du colis obtenu selon le procédé selon la présente divulgation qui comprend un bouquet de fleurs coupées dont les tiges sont reçues dans l'emballage primaire qui est refermé sur les tiges des fleurs du bouquet, les extrémités coupées des tiges en contact avec la matière absorbante naturelle humidifiée, et se différenciant de celui illustré à la figure 2 en ce que l'emballage primaire est une poche souple formée d'un film étanche, et non un conteneur cartonné.
**Fig. 4a**

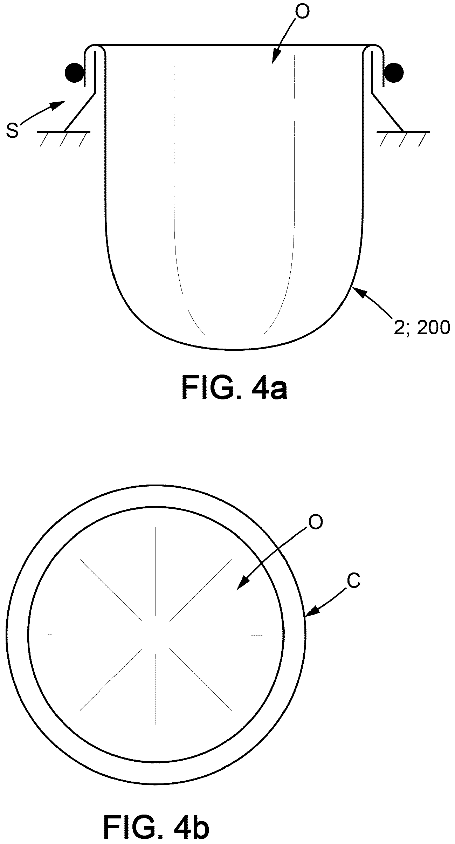

   [Fig. 4a] est une vue de coupe d'un support périphérique qui assure le maintien de l'ouverture de la poche soupe de la figure 3 lors de la mise en œuvre du procédé.
**Fig. 4b**
   [Fig. 4b] est une vue de la poche souple maintenue par le support périphérique.
**Fig. 5**

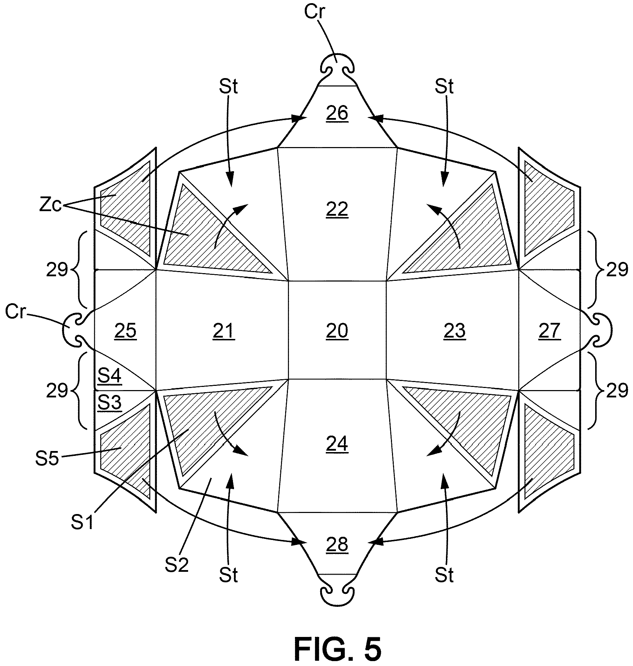

   [Fig. 5] est un flan de carton découpé qui peut être utilisé pour réaliser un emballage primaire, selon un mode de réalisation de la présente divulgation.
**Fig. 6**

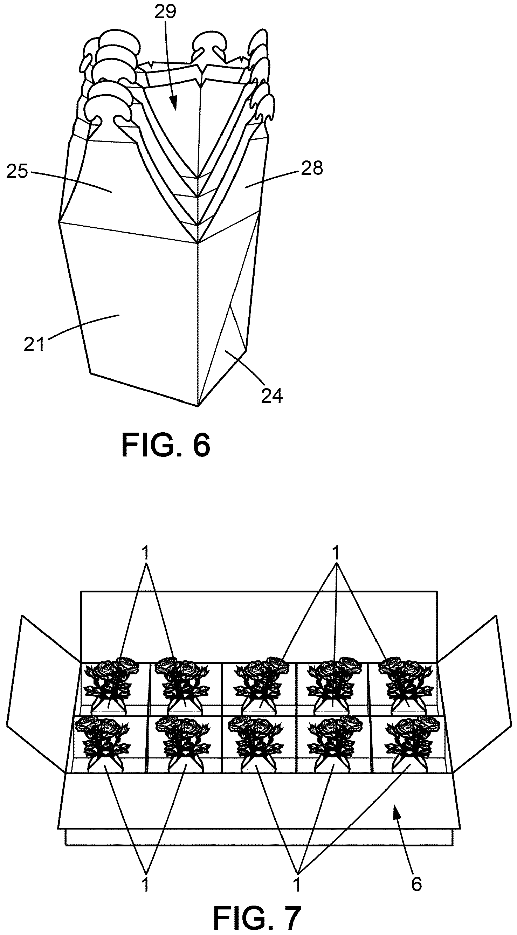

   [Fig. 6] est une vue des emballages primaires après pliage du flan de carton découpé de la figure 5, les emballages primaires étant tronconiques, permettant un empilage les uns dans les autres lors de leur stockage.
**Fig. 7**
   [Fig. 7] est une vue des emballages primaires reçus et calés dans divers compartiments d'un carton formant un emballage secondaire du colis.

### Description des modes de réalisation

Aussi, la présente divulgation est relative à un procédé d'obtention d'un colis de fleurs coupées F comprenant les étapes suivantes :
/A/ Disposer un emballage primaire 1 formant un conteneur pour les tiges des fleurs coupées, l'emballage présentant une ouverture O,
/B/ Disposer une dose 2 de matière naturelle absorbante dans le conteneur ouvert, ainsi qu'un volume d'eau 3, absorbé entièrement par la matière naturelle absorbante,
/C/ Disposer les fleurs coupées avec insertion des tiges coupées dans la matière naturelle absorbante humidifiée 4, et éventuellement
/D/ Refermer l'ouverture de l'emballage primaire sur les tiges bouquets de sorte à maintenir prisonnier la matière naturelle absorbante humidifiée au sein du conteneur fermé sur les tiges du bouquet, avec mise en contact des extrémités coupées Ec des tiges des fleurs coupées F avec la matière naturelle absorbante humidifiée 4, obtenant le colis de fleurs coupées.

La figure 1a illustre un emballage primaire constitué, à titre d'exemple, d'un flan de carton prédécoupé, plié et notamment collé de sorte à obtenir un conteneur tronconique avec une paroi de fond 20, quatre parois latérales 21 à 24 évasées, et quatre volets de fermeture 25 à 28 attenants respectivement chacun par une ligne de pliage aux bords supérieurs des quatre parois latérales.

Ce conteneur comprend une ouverture O délimitée par les bords supérieurs des quatre parois latérales 21 à 24, l'ouverture O étant laissée ouverte par les volets de fermeture 25 à 28 à l'étape /A/ dans une position d'ouverture des volets.

Additionnement, des soufflets 29 peuvent être prévus entre deux volets de fermeture consécutifs, comme visible à la figure 6. Ces soufflets 29 peuvent être obtenus par le flan de carton découpé et pré-plié de la figure 5, et comme il sera décrit en détail par la suite, et constituent une sécurité supplémentaire pour éviter les fuites de matière naturelle humidiée 4. La figure 1b illustre la sous étape de l'étape /B/ pour laquelle on dispose une dose de matière absorbante naturelle et la figure 1c la sous étape de l'étape /B/ pour laquelle on dispose un volume d'eau dans le conteneur.

La dose de matière naturelle absorbante peut-être disposée préalablement au volume d'eau comme illustré à la figure 1c, ou inversement à savoir que le volume d'eau peut être disposé préalablement à la dose de matière naturelle dans le conteneur, et selon une variante non illustrée. Le volume d'eau est déterminé inférieur (ou égal) à la capacité d'absorption de la matière naturelle de sorte que l'eau soit entièrement absorbée par la matière naturelle. Au bout d'un certain temps, quelques minutes au maximum par exemple typiquement entre une 1 minute et 6 minutes, l'eau est entièrement absorbée par la matière naturelle absorbante, et comme illustré à la figure 1d, à savoir sans présence d'eau libre, non absorbée par la dose 2 de matière absorbante naturelle.

A la figure 1e, les tiges des fleurs coupées sont insérées dans la matière naturelle absorbante, plantées dans cette matière, les extrémités coupées Ec en contact avec la matière absorbante humidifiée 4. A la figure 1f, l'ouverture de l'emballage primaire est refermée sur les tiges bouquets, notamment par pliage des volets de fermeture 25 à 28 contre les tiges du bouquet de fleurs coupées, et mise en place d'un lien 5.

On assure le maintien prisonnier de la matière naturelle absorbante humidifiée 4 au sein du conteneur fermé sur les tiges du bouquet de fleurs, avec mise en contact des extrémités coupées Ec des tiges des fleurs coupées F avec la matière naturelle absorbante humidifiée 4, obtenant le colis de fleurs coupées.

A la figure 2 est illustré en perspective le colis de fleurs coupées dont les tiges sont maintenues dans l'emballage primaire, en contact par leur extrémités coupées Ec avec la matière absorbante humidiée 4.

Un tel colis assure une hydratation du bouquet de fleurs coupées lors du transport sur une période pouvant atteindre plusieurs jours (2-3 jours voire plus), et sans risque de fuite, puisque le conteneur de l'emballage primaire est dépourvu d'eau libre. Même lorsque le colis est retourné (à savoir que les extrémités coupées des fleurs sont dirigées vers l'eau), la matière naturellement humidifiée 4 est maintenue au sein de l'emballage primaire par la fermeture de l'ouverture de l'emballage primaire sur les tiges du bouquet de fleurs coupées.

Selon un mode de réalisation, la dose 2 de matière naturelle peut être de la matière végétale en particules, telle que de la sciure de végétal ou un broyatde végétal. En particulier, la matière végétale peut être du bois en particules. Selon un mode de réalisation particulier, avantageux, le bois peut être avantageusement du peuplier. Encore la matière de végétal peut être du chanvre et en particulier la chènevotte du chanvre, à savoir les fibres contenues à cœur des tiges du chanvre. Les avantages du peuplier et de la chènevotte de chanvre sont détaillés par la suite.

Avantageusement, les particules de végétal peuvent être des lamelles. Une granulométrie des particules en lamelles est avantageuse en ce qu'elle assure une absorption de l'eau plus rapide comparativement à une granulométrie se reprochant d'une sphère ou d'un cube.

A cet effet, les lamelles sont d'épaisseur, de longueur et de largeur suivantes :
- épaisseur inférieur à 1 mm telle que compris entre 0,1mm et 0,6 mm,
- longueur comprise entre 2 mm à 7mm,
- largueur comprise entre 1 mm à 3mm.

Selon un mode de réalisation avantageux, la matière absorbante est de la cellulose en particules, telles que des lamelles en particulier d'épaisseur comprise entre 1/10 de millimètre et 7/10 de millimètre, de longueur comprise entre 2mm et 4mm et de largeur comprise entre 1mm à 2 mm.

Le volume d'eau à l'étape /B/ peut être compris entre 140 ml et 450 ml, en particulier compris entre 300 ml et 400 ml tel que 350ml pour un bouquet de fleurs de taille moyenne. A l'étape /B/, le volume d'eau peut être dosé par un conteneur doseur CD, et comme illustré à la figure 1c.

De manière générale, le dose de matière naturelle peut être comprise entre 30g et 100g. En particulier, la dose de peuplier ou de chanvre à l'état sec à l'étape /B/ peut être comprise entre 30g et 100 g, en particulier entre 35g et 80g, tel que par exemple 50g ou 60g.

Selon un mode de réalisation, la dose de matière naturelle à l'état sec à l'étape /B/ peut être sous forme d'un bloc compressé de particules de végétal et en particulier un bloc de particules de végétal (par exemple du bois, peuplier, ou chanvre) sous forme de lamelles.

Le bloc compressé est obtenu par compression des particules dans une matrice d'une presse. La pression exercée est de préférence inférieure à une tonne par cm³ de matière végétale.

Selon une variante le bloc de particules de végétal peut être un bloc compressé de lamelles de cellulose.

Ainsi la présente divulgation concerne encore procédé de fabrication d'un bloc compressé de particules végétales de cellulose, convenant pour la mise en œuvre de du procédé de la revendication 11, comprenant les étapes suivantes :
- dérouler une bande de cellulose à partir d'une bobine de cellulose,
- découper la bande de cellulose en lamelles, en particulier d'épaisseur comprise entre 1/10 de millimètre et 7/10 de millimètre, de longueur comprise entre 2mm et 4mm et de largeur comprise entre 1mm à 2 mm, par des découpes transversales à la direction de la bande et des découpes longitudinales à la direction de la bande,
- regrouper les lamelles dans une matrice d'une presse et compresser les lamelles jusqu'à obtenir un bloc compressé de particules végétales de cellulose.

La bande de cellulose peut être déroulée, de manière discontinue, suivant un pas correspondant à la longueur de lamelle, les découpes transversales étant mise en œuvre lorsque à l'arrêt entre deux séquences d'avance de la bande.

L'épaisseur des lamelles dépend de T'épaisseur de la bande de cellulose, et est ainsi typiquement comprise dans une plage de l'ordre de quelques dixièmes de millimètres.

La pression exercée dans la presse entre deux parties d'une matrice, typiquement mâle et femelle peut être comprise entre 200 et 1000 Newtons par cm³.

Selon un mode de réalisation illustré aux figures, l'emballage primaire peut être un conteneur obtenu par cartonnage, par pliage d'un flan de carton, le conteneur comprenant :
- une paroi fond 20 et des parois latérales 21 à 24, ladite ouverture O, supérieure étant définie entre des bords supérieurs des parois latérales 21 à 24,
- des volets 25, 26, 27, 28, de fermeture qui sont attenants par des lignes de pli aux bords supérieurs des parois latérales, 21 à 24.

La figure 5 illustre ainsi un flan de carton permettant d'obtenir un conteneur étanche entre la paroi de fond 20 et les parois latérales 21 à 25. De manière générale, le flan de carton peut être pré-plié selon les contours de la paroi de fond 20, des parois latérales 21 à 24, et des volets de fermetures 25 à 28. Les parois latérales 21 à 24 sont attenantes par leurs bords latéraux par quatre soufflets St du flan de carton qui sont pliés selon le sens des flèches et collés par une zone de colle Zc. Une fois le conteneur tronconique formé, ces soufflets St sont collés et maintenus verrouillés contre les parois latérales 21 à 24 en assurant une étanchéité au fluide respectivement entre deux parois latérales successives du conteneur. Les quatre soufflets St, pliés et collés, assurent ainsi l'étanchéité entre les parois latérales aux quatre coins du conteneur. Le carton peut être typiquement laminé et traité de sorte à être étanche à l'eau.

Ainsi, et à la figure 5, et de manière générale on remarque que le flan de carton pré-plié définit :
- la paroi de fond 20 qui est un rectangle en particulier un carré,
- les quatre parois latérales 21 à 24, sous forme de trapèzes isocèles, qui sont attenantes par la petite base du trapèze solidaire, respectivement aux quatre côtés de la paroi de fond 21, via des lignes de pli,
- les quatre volets de fermeture 25 à 28 qui sont attenants respectivement aux parois latérales 21 à 24 par la grande base du trapèze, via des lignes de pli.

Les quatre soufflets St s'étendent respectivement aux quatre coins du conteneur, chacun entre deux cotés successifs des parois latérales 21 à 24, y compris un premier soufflet entre la première paroi latérale 21 et la deuxième paroi latérale 22, un deuxième soufflet entre la deuxième paroi latérale 22 et la troisième paroi latérale 23, un troisième soufflet entre la troisième paroi latérale 23 et la quatrième paroi latérale 24 et un quatrième soufflet entre la quatrième paroi latérale et la première paroi latérale.

Chaque soufflet St comprend deux segments S1, S2 triangulaires, avec un premier segment S1 triangulaire attenant via une ligne de pli à un coté d'une des parois latérales 21 à 24, et un deuxième segment S2 attenant via une ligne de pli à un côté d'une paroi latérale successive, les deux segments solidaires via une ligne de pli par deux de leurs côtés communs.

Lors de la mise en forme du conteneur, les soufflets ST sont pliés et collés par repliage des deux segments S1, S2 et collage mutuel des segments S1, S2 par application d'une zone de colle Zc, grisée à la figure 5.

A l'étape /D/ les volets de fermeture 25 à 28 sont rabattus contre les tiges du bouquets et maintenus par la pose d'un lien 5. Les extrémités libres des volets de fermeture peuvent présenter un système de crochet Cr, facilitant l'accrochage du lien 5.

Les volets de fermeture 25 à 28 alors en position de fermeture sur les tiges du bouquet assurent le maintien de la matière absorbante humidifiée dans le conteneur, sans risque que la matière s'échappe entre les tiges des fleurs et les volets de fermeture, alors en position de fermeture.

De manière avantageuse, et afin d'éviter tout risque de fuite de matière entre deux volets de fermeture, quatre soufflets 29 peuvent être prévus et s'étendre respectivement entre les côtés des volets de fermeture 25 à 29. Chaque soufflet 29 est configuré pour assurer une étanchéité pour la matière absorbante humidifiée 4 entre deux volets de fermeture successifs lorsque le conteneur est retourné.

Ces soufflets 29 sont configurés pour se déployer lorsque les volets de fermeture 25 à 29 sont dans leur position d'ouverture libérant l'ouverture O du conteneur, et pour se replier sur eux même lorsque les volets de fermeture 2 assurent la fermeture de l'ouverture par rabattement des volets de fermeture contre les tiges du bouquets et maintenus par le lien 5.

A la figure 5, on remarque que chaque soufflet 29 comprend deux segments S3, S4 triangulaires, avec un premier segment S3 triangulaire attenant via une ligne de pli à un coté d'un des volets de fermeture, et un deuxième segment S4 attenant via une ligne de pli à un segment S5, d'extrémité, formant une zone de collage sur un volet de fermeture successif.

Les deux premiers segments S3, S4 sont solidaires l'un à l'autre via une ligne de pli via un de leurs côtés commun. Lors de la formation du conteneur, le segment S5 du soufflet est collé sur un volet de fermeture successif. Lorsque les volets de fermeture 25 à 29 sont passés de leur position d'ouverture à leur position d'ouverture par pivotement des volets de fermeture 25 à 28 autour des lignes de pli avec les parois latérales 21 à 24, les soufflets 29 se déploient par pliage des lignes de pli entre les segments S3, S4, et S5, ainsi que par pliage de la ligne de pli entre le segment S3 et le volet de fermeture.

A la figure 6, on remarque que la forme tronconique des conteneurs permet avantageusement un stockage des conteneurs tronconique les uns dans les autres, par insertion dans leur ouverture O, avec un recouvrement entre deux conteneurs successifs empilés notamment supérieur à 80% suivant la hauteur du conteneur.

Toutefois, l'emballage primaire 1 peut prendre bien d'autres formes, et n'est absolument pas limité à un emballage cartonné, notamment obtenu par pliage, voire collage d'un flan de carton et comme illustré à la figure 5.

Par exemple à la figure 3, l'emballage primaire peut être simplement une poche formée par un film de matière étanche l'emballage primaire.

La poche est ainsi formée par un film 200 de matière étanche. Aux étapes /A/, /B/ et /C/, le film est de préférence maintenu au niveau de l'ouverture O du conteneur formé par le film sur un support périphérique S. A l'étape /D/, le film est refermé sur les tiges des fleurs et maintenu sur les tiges par la pose d'un lien 5.

Un tel support périphérique S, circulaire permet le maintien de l'ouverture du conteneur souple, pour la mise en œuvre des étapes /A/, /B/ et /C/. On peut avantageusement utiliser pour le film 200, un biopolymère, notamment de fécule de pommes de terre, de maïs, blé ou autre.

La présente divulgation concerne encore un colis de fleurs coupée obtenu selon le procédé selon la présente divulgation comprenant un bouquet de fleurs coupées dont les tiges sont reçues dans l'emballage primaire 1 qui est refermé sur les tiges des fleurs coupées du bouquet, les extrémités coupées Ec des tiges en contact avec la matière absorbante naturelle humidifiée 4. L'emballage primaire peut être l'emballage obtenu à partir du flan de carton, l'emballage souple formant une poche souple, voire tout autre emballage.

Selon un mode de réalisation, les étapes /A/, /B/, /C/ et /D/ sont renouvelées, obtenant plusieurs colis de fleurs coupées emballés chacun par l'emballage primaire 1 à l'étape /D/. Chaque colis comprend un bouquet de fleurs coupées dont les tiges sont reçues dans l'emballage primaire 1 qui est refermé sur les tiges des fleurs du bouquet.

Les extrémités coupées des tiges sont en contact avec la matière absorbante naturelle humidifiée. Comme illustré à titre indicatif à la figure 7, on dispose les différents bouquets de fleurs coupées dans un carton formant un emballage secondaire 6, calés à l'intérieur du carton de l'emballage secondaire, et on ferme l'emballage secondaire.

La présente divulgation concerne encore le colis de fleurs coupés obtenu par le procédé comprenant un emballage secondaire formé par un carton recevant une pluralité de bouquets de fleurs coupées dont les tiges de chaque bouquets de fleurs sont reçues dans l'emballage primaire 1 qui est refermé sur les tiges des fleurs du bouquet, les extrémités coupées des tiges en contact avec la matière absorbante naturelle humidifiée, les différents bouquets de fleurs coupées calés à l'intérieur du carton de l'emballage secondaire.

### Matières absorbantes naturelles sélectionnées

Dans le cadre de la présente divulgation, la matière absorbante naturelle respecte de préférence un cahier des charges et présente certaines caractéristiques pour une mise en œuvre économiquement viable du procédé selon la présente divulgation :

En particulier, l'inventeur a déterminé pour caractéristiques essentielles du cahier des charges pour la matière naturelle 2 :
- Matière naturelle, sans pesticide et sans produit chimique ;
- Biodégradable ;
- Bon marché ;
- Absorbe de préférence au moins trois fois son volume ;
- Absorption du volume d'eau rapide en 5 minutes ;
- Permet de planter très facilement les tiges lorsque la matière naturelle absorbante humidifiée,
- Retient l'eau même contenant retourné ;
- Restitue l'eau aux fleurs.

Le peuplier à l'état de particules (lamelles d'épaisseur de 0,1 à 0,5 mm, de longueur de 2 à 5 mm et de largeur comprise entre 1 à 3 mm) est un candidat sélectionné par l'inventeur qui répond à tous ces critères du cahier des charges, à savoir que le peuplier présente les avantages suivants :
- Sans pesticide sans produit chimique ;
- Biodégradable ;
- Bon marché ;
- Absorbe en environ sept fois son volume en eau ;
- Absorption en 1min 30 (vitesse d'absorption pour un volume d'eau de 350 ml et un bloc compressé de particules de peuplier de 50g) ;
- les lamelles de peuplier, même compressées permettent de planter très facilement les tiges, une fois humidifiée ;
- Retient l'eau même contenant retourné ;
- Restitue l'eau aux fleurs.

Au-delà de ces avantages et par comparaison à un bouquet de fleurs reçu dans un volume d'eau (libre), l'inventeur a remarqué que le peuplier inhibe le développement de moisissure, et ainsi des mauvaises odeurs.

Un autre candidat sélectionné est ainsi la chènevotte de chanvre en particules qui présente les caractéristiques suivantes :
- Sans pesticide sans produit chimique ;
- Biodégradable ;
- Bon marché ;
- Absorbe environ sept fois son volume en eau ;
- Absorption en 5 minutes (vitesse d'absorption pour un volume d'eau de 300 ml et un bloc compressé de chanvre de 50g) ;
- le chanvre même compressé permet de planter très facilement les tiges, une fois humidifiée ;
- Retient l'eau même contenant retourné ;
- Restitue l'eau aux fleurs.

Ainsi on constate que la chènevotte de chanvre répond au cahier des charges, mais de manière moins performante que le peuplier en ce que la vitesse d'absorption de l'eau par le chanvre est environ trois fois moins rapide que la vitesse d'absorption de l'eau par la sciure de peuplier. Le peuplier en particules permet avantageusement une mise en œuvre plus rapide des colis, par comparaison au à la chènevotte de chanvre. Au-delà de ces avantages et par comparaison à un bouquet de fleurs reçu dans un volume d'eau (libre) l'inventeur a remarqué que le chanvre inhibe le développement de moisissure, et ainsi des mauvaises odeurs (à trois jours).

L'inventeur a toutefois constaté un développement de moisissures (à dix jours) visible à l'œil nu sur les tiges de fleurs plantées dans les particules chanvre, et alors que les tiges de fleurs (à dix jours) plantées dans les particules de peuplier ne laissent pas apparaître de trace de moisissure à l'œil nu.

Un autre candidat très avantageux est la cellulose et en particulier à partir du bloc compressé de lamelles de celluloses. Comme décrit précédemment, le bloc peut être obtenu à partir d'une bobine de cellulose.

Ladite bobine est prise dans un granulateur à bande afin d'obtenir des lamelles de cellulose grâce à la combinaison d'une coupe transversale et de coupe(s) longitudinale(s) de la bobine.

La longueur ou la largeur des lamelles dépendent du pas d'avance du granulateur. à bande.

A titre indicatif : Quelques 1/10 de millimètres d'épaisseur (selon l'épaisseur de la feuille de cellulose de la bobine). La longueur peut être comprise entre 2 à 4 m et la largeur 1 à 2 mm.

A titre indicatif, un bloc compressé de 50 g de cellulose de diamètre 50 mm et d'épaisseur 30 mm absorbe en 7 secondes 250 ml d'eau, ce qui est suffisant pour maintenir frais un bouquet de 20 à 25 tiges de fleurs durant 5 à 6 jours sans ajout d'eau, permettant ainsi le transport d'un bouquet de son point de fabrication à destination.

Aussi, de manière générale, on vise à obtenir un bloc compressé de lamelles de cellulose offrant une vitesse d'absorption inférieur à 20 secondes, de préférence inférieur à 10 secondes pour absorber 5ml d'eau par gramme de matière naturelle cellulose.

Par comparaison à un bloc compressé, à base de sciure de peuplier, la cellulose en lamelles offre une vitesse d'absorption très rapide, à savoir 7 secondes pour absorber entièrement l'eau, à comparer à plus de 60 secondes pour le bloc de particules de peuplier, ou encore 5 minutes pour un bloc de chanvre. Le bloc compressé à partir de lamelles de cellulose est ainsi très avantageux en termes de capacité de production des colis.

Une fois le bloc de cellulose disloqué par l'absorption de l'eau, l'aspect blanc de la cellulose offre une vision plus agréable que brunâtre des particules de peuplier ou de chanvres.

A savoir que la compression de la matière végétale en particules sous forme de galet permet d'optimiser son transport mais aussi de supprimer les imprécisions de dosage quant à l'utilisation de ladite matière. La proportion bloc compressé / volume d'eau étant bien définie assure une mise en œuvre rapide pour les opérateurs et limitant les risques d'erreur.

De manière notable, l'ajout de l'eau permet au bloc de s'expanser comme visible aux figures 1c et 1d, et notamment de sorte qu'à l'étape /D/ le volume de la matière naturelle humidifié 4 représente au moins 50% du volume du conteneur refermé sur les tiges du bouquet, voire au moins 75% du volume du conteneur

### Application industrielle

Ces différents colis comprenant l'emballage primaire, voire également l'emballage secondaire, trouveront une application particulière pour le transport de bouquets de fleurs par camion, avion, bateaux ou autre véhicule, notamment par voie postale, et sans risque de fuite, même lorsque le sens « haut » des colis n'est pas respecté lors du transport, tout en assurant une hydratation satisfaisante et ainsi une préservation des fleurs coupées.

De manière générale, à l'étape /D/ le volume de la matière naturelle humidifié 4 peut représenter au moins 50% du volume du conteneur refermé sur les tiges du bouquet, voire au moins 75% du volume du conteneur.

Par comparaison aux emballages connus de l'état de la technique avec système d'hydratation synthétique (mousse plastique ou similaire), le colis obtenu selon le procédé de la présente divulgation permettra avantageusement de faciliter le traitement des déchets en fin de vie. Dans cet objectif, on peut utiliser de préférence un emballage primaire en carton, à base de biopolymère.

### Liste des signes de référence

- 1 Emballage primaire,
- 2 Dose de matière naturelle absorbante (sec),
- 20. Paroi de fond (carton),
- 21 à 24. Parois latérales,
- 25 à 28. Volets de fermeture,
- 29. Soufflets entre volets de fermeture,
- 200. Film,
- Sr. Soufflets (assurant l'étanchéité à l'eau lors du remplissage entre les parois latérales),
- Zc. Zone de collage,
- S1 à S5. Segments,
- S. Support périphérique,
- Cr. Crochets (volets de fermeture)
- 3. Volume d'eau,
- 4. Matière naturelle absorbante humidifiée,
- 5. Lien,
- 6. Emballage secondaire
- F. Fleurs coupées,
- O. Ouverture,
- Ec. Extrémités coupées,
- CD conteneur doseur.

## Revendications

1. Procédé d'obtention d'un colis de fleurs coupées (F) comprenant les étapes suivantes :
/A/ Disposer un emballage primaire (1) formant un conteneur pour les tiges des fleurs coupées, avec une ouverture (O),
/B/ Disposer une dose (2) de matière naturelle absorbante dans le conteneur ouvert, ainsi qu'un volume d'eau (3), absorbé entièrement par la matière naturelle absorbante,
/C/ Disposer les fleurs coupées avec insertion des tiges coupées dans la matière naturelle absorbante humidifiée (4),
/D/ Refermer l'ouverture de l'emballage primaire sur les tiges bouquets de sorte à maintenir prisonnier la matière naturelle absorbante au sein du conteneur fermé sur les tiges du bouquet de fleurs, avec mise en contact des extrémités coupées (Ec) des tiges des fleurs coupées (F) avec la matière naturelle absorbante humidifiée (4), obtenant le colis de fleurs coupées.

2. Procédé selon la revendication 1, dans lequel la dose (2) de matière naturelle est de la matière végétale, en particules, telle qu'un broyatde matière végétale ou de la sciure de végétal.

3. Procédé selon la revendication 2, dans lequel la matière végétale sont des particules de bois.

4. Procédé selon la revendication 3, dans lequel le bois est du peuplier.

5. Procédé selon revendication 2, dans lequel la matière végétale est la chènevotte de chanvre.

6. Procédé selon l'une des revendications 2 à 4, dans lequel les particules de végétal sont des lamelles.

7. Procédé selon la revendication 6 dans lequel les lamelles sont d'épaisseur, de longueur et de largeur suivantes :
- épaisseur inférieur à 1 mm telle que compris entre 0,1mm et 0,6mm,
- longueur comprise entre 2 mm à 7mm,
- largeur comprise entre 1 mm à 3mm.

8. Procédé selon la revendication 2, dans lequel la matière absorbante est de la cellulose en particules, telles que des lamelles en particulier d'épaisseur comprise en être 1/10 de millimètre et 7/10 de millimètre, de longueur comprise entre 2mm et 4mm et de largeur comprise entre 1mm à 2 mm.

9. Procédé selon l'une des revendications 1 à 8, dans lequel le volume d'eau à l'étape /B/ est compris entre 140 ml et 450 ml, en particulier compris entre 300 ml et 400 ml.

10. Procédé selon la revendication 4 ou 5, voire prise en combinaison avec la revendication 9, dans lequel la dose de particules de peuplier ou de particules de chènevotte de chanvre à l'état sec à l'étape /B/ est comprise entre 30g et 100 g, en particulier entre 35g et 80g.

11. Procédé selon la revendication 2 seule ou prise en combinaison avec l'une des revendications 3 à 10, dans lequel la dose de matière naturelle à l'état sec à l'étape /B/ est un bloc compressé des particules de végétal, en particulier un bloc compressé de particules de cellulose.

12. Procédé selon l'une des revendications 1 seule ou prise en combinaison avec l'une des revendications 2 à 10, dans lequel l'emballage primaire est un conteneur obtenu par cartonnage, par pliage d'un flan de carton, le conteneur comprenant :
- une paroi fond (20) et des parois latérales (21, 22, ,23, 24) avec ladite ouverture, supérieure définit entre des bords supérieurs des parois latérales,
- des volets (25, 26, 27, 28,) de fermeture attenant par des lignes de pliage aux bords supérieurs des parois latérales,
et dans lequel à l'étape /D/ les volets de fermetures sont rabattus contre les tiges du bouquet et maintenus par la pose d'un lien (5).

13. Procédé selon la revendication 12, dans lequel la paroi de fond (20) et les parois latérales (21, 22, ,23, 24) au nombre de quatre définissent un conteneur de forme tronconique, et dans lequel quatre soufflets (St), s'étendent respectivement entre deux cotés successifs des parois latérales (20, 21, 23, 24) pour assurer l'étanchéité au fluide entre les parois latérales du conteneur tronconique, y compris un premier soufflet (ST) entre la première paroi latérale (21) et la deuxième paroi latérale (22), un deuxième soufflet entre la deuxième paroi latérale (22) et la troisième paroi latérale (23), un troisième soufflet entre la troisième paroi latérale (23) et la quatrième paroi latérale (24) et un quatrième soufflet entre la quatrième paroi latérale (24) et la première paroi latérale (21), chaque soufflet (St) comprenant deux segments (S1, S2) triangulaires, avec un premier segment (S1) triangulaire attenant via une ligne de pli à un coté d'une des parois latérales, et un deuxième segment attenant via une ligne de pli à un côté d'une paroi latérale successive, les deux segments (S1, S2) solidaires l'un de l'autre via une ligne de pli et dans lequel le conteneur tronconique est obtenu par pliage des soufflets (St) qui sont pliés par repliage des deux segments (S1, S2) et collage mutuel des segments (S1, S2).

14. Procédé selon la revendication 12 ou 13, dans lequel des soufflets (29), notamment au nombre de quatre, s'étendent respectivement entre les côtés des volets de fermeture (25 à 28), chaque soufflet (29) étant configuré pour assurer, dans la position rabattue des volets de fermeture contre les tiges des fleurs, une étanchéité pour la matière absorbante humidifiée (4), entre deux volets de fermeture successifs lorsque le conteneur est retourné, les soufflets (29) étant configurés pour se déployer lorsque les volets de fermeture sont dans leur position d'ouverture, libérant l'ouverture (O) du conteneur, et pour se replier sur eux même lorsque les volets de fermeture (29) assurent la fermeture de l'ouverture par rabattement des volets de fermeture contre les tiges du bouquets, les volets ce fermeture maintenus par la pose du lien (5), à l'étape /D/.

15. Procédé selon la revendication 1 seule ou prise en combinaison avec l'une des revendications 2 à 11 dans lequel l'emballage primaire est une poche formée par un film (200) de matière étanche et dans lequel aux étapes /A/, /B/ et /C/ le film est maintenu, au niveau de l'ouverture du conteneur formé par le film, sur un support périphérique (S), et dans lequel à l'étape /D/ le film est refermé sur les tiges des fleurs et maintenu sur les tiges par la pose d'un lien.

16. Procédé selon la revendication 15, dans lequel le film (200) est un biopolymère.

17. Procédé selon la revendication 1 seule ou prise en combinaison avec l'une des revendications 2 à 16, à l'étape /D/ le volume de la matière naturelle humidifié (4) représente au moins 50% du volume du conteneur refermé sur les tiges du bouquet, voire au moins 75% du volume du conteneur

18. Colis de fleurs coupée obtenu selon le procédé de la revendication 1 seule ou prise en combinaison avec l'une des revendications 2 à 17 comprenant un bouquet de fleurs coupées dont les tiges sont reçues dans l'emballage primaire (1) qui est refermé sur les tiges des fleurs coupées du bouquet, les extrémités coupées (Ec) des tiges en contact avec la matière absorbante naturelle humidifiée (4).

19. Procédé selon de la revendication 1 seule ou prise en combinaison avec l'une des revendications 2 à 17 dans lequel les étapes /A/, /B/, /C/ et /D/ sont renouvelées, obtenant plusieurs colis de fleurs coupées emballés par des emballages primaires (1) à l'étape /D/, comprenant chacun un bouquet de fleurs coupées dont les tiges sont reçues dans l'emballage primaire (1) qui est refermé sur les tiges des fleurs du bouquet, les extrémités coupées des tiges en contact avec la matière absorbante naturelle humidifiée et dans lequel on dispose les différents bouquets de fleurs coupées emballés dans les emballages primaires dans un carton formant un emballage secondaire (6), calés à l'intérieur du carton de l'emballage secondaire, et on ferme l'emballage secondaire.

20. Colis de fleurs coupés obtenu par le procédé de la revendication 19.

21. Utilisation des colis obtenus selon le procédé selon l'une des revendication 1 à 17, ou du colis obtenu selon le procédé de la revendication 19 pour le transport de bouquets de fleurs par camion, bateau ou avion.

22. Procédé de fabrication d'un bloc compressé de particules végétales de cellulose, convenant pour la mise en œuvre de du procédé de la revendication 11, comprenant les étapes suivantes :
- dérouler une bande de cellulose à partir d'une bobine de cellulose,
- découper la bande de cellulose en lamelles, en particulier d'épaisseur comprise entre 1/10 de millimètre et 7/10 de millimètre, de longueur comprise entre 2mm et 4mm et de largeur comprise entre 1mm à 2 mm, par des découpes transversales à la direction de la bande et des découpes longitudinales à la direction de la bande,
- regrouper les lamelles dans une matrice d'une presse et compresser les lamelles jusqu'à obtenir un bloc compressé de particules végétales de cellulose en particulier à une pression comprise entre 200 et 1000 Newtons par cm³.

23. Bloc compressé de lamelles de cellulose, en particulier obtenu selon la revendication 22, les lamelles d'épaisseur comprise entre être 1/10 de millimètre et 7/10 de millimètre, de longueur comprise entre 2mm et 4mm et de largeur comprise entre 1mm à 2 mm, et dans lequel ledit bloc présente une vitesse d'absorption inférieure à 20 secondes, de préférence inférieur à 10 secondes pour absorber 5ml d'eau par gramme de matière naturelle cellulose.
